# EUROPÄISCHE PATENTSCHRIFT

(11) **EP 2 643 746 B1**
(45) Veröffentlichungstag und Bekanntmachung des Hinweises auf die Patenterteilung: **25.03.2020**
(21) Anmeldenummer: 11794639.2
(22) Anmeldetag: 25.11.2011
(51) Int. Cl.: G06F 3/042, G06F 3/041

(54) **BEDIENVORRICHTUNG**
OPERATING DEVICE
DISPOSITIF DE COMMANDE

(30) Priorität: 25.11.2010 DE 102010052330
(43) Veröffentlichungstag der Anmeldung: 02.10.2013
(73) Patentinhaber: Marquardt GmbH, 78604 Rietheim-Weilheim (DE)
(72) Erfinder: KRAMER, Markus, 78546 Spaichingen (DE); STOPPER, Guido, 72469 Messstetten-Heinstetten (DE)
(74) Vertreter: Otten, Roth, Dobler & Partner mbB Patentanwälte
(86) Internationale Anmeldenummer: PCT/EP2011/005939
(87) Internationale Veröffentlichungsnummer: WO 2012/069203

(56) Entgegenhaltungen:
- EP-A1- 2 249 240
- US-A1- 2003 227 446
- US-A1- 2009 267 902
- US-A1- 2010 103 139
- US-A1- 2010 177 060

## Beschreibung

Die Erfindung betrifft eine Bedienvorrichtung nach dem Oberbegriff des Patentanspruchs 1.

Solche Bedienvorrichtungen werden in Kraftfahrzeugen zur Bedienung unterschiedlichster Funktionen durch einen Benutzer eingesetzt.

Eine derartige Bedienvorrichtung in der Art eines Touchpads mit einer Sensorfläche und mit einer Sensoreinrichtung ist an sich bekannt. Bei Berührung der Sensorfläche mittels eines Bedienelementes, beispielsweise eines Fingers des Benutzers, und/oder in unmittelbarer Nähe des Bedienelementes zur Sensorfläche ist mittels der Sensoreinrichtung ein Signal erzeugbar. Der Bedienungswunsch des Benutzers wird damit erst in unmittelbarer Nähe des Bedienelementes an der Sensorfläche detektiert. In der US 2010/0103139 A1 ist eine solche Bedienvorrichtung mit einer optisch arbeitenden Sensoreinrichtung beschrieben.

Weiter ist aus der US 2009/0267902 A1 eine Bedienvorrichtung bekannt, die zusätzlich zur Sensoreinrichtung, also zur ersten Sensoreinrichtung, eine zweite Sensoreinrichtung aufweist. Die zweite Sensoreinrichtung detektiert Bewegungen des Bedienelementes über der Sensorfläche, also solche die entfernt von der Sensorfläche bzw. die Sensorfläche nicht berührend sind, und/oder Bewegungen auf der Sensorfläche, also solche die nahe an der Sensorfläche bzw. die Sensorfläche berührend sind, und/oder die Annäherung des Bedienelementes an die Sensorfläche unter Erzeugung eines zweiten Signals. Bei dieser Bedienvorrichtung arbeitet die erste Sensoreinrichtung mit Piezoelementen, während es sich bei der zweiten Sensoreinrichtung um eine optische Sensoreinrichtung handelt. Eine solche Bedienvorrichtung ist auch in der US 2003/0227446 A1 beschrieben.

Weiterhin zeigt die EP 2 249 240 A1 eine Bedienvorrichtung mit einer ersten, kapazitiv arbeitenden Sensoreinrichtung sowie einer zweiten, resistiv oder optisch arbeitenden Sensoreinrichtung. Diese Bedienvorrichtung wird durch den Finger eines Benutzers bedient, wobei die beiden Sensoreinrichtungen zur Unterscheidung der Bedienung mittels des Fingernagels sowie der Fingerkuppe dienen. Eine weitere, mit zwei Sensoreinrichtungen versehene Bedienvorrichtung ist aus der US 2010/177060 A1 bekannt.

Der Erfindung liegt die Aufgabe zugrunde, die Bedienvorrichtung derart weiterzuentwickeln, dass der Bedienungswunsch des Benutzers schon im Vorfeld zur eigentlichen Bedienung erkennbar ist.

Diese Aufgabe wird bei einer gattungsgemäßen Bedienvorrichtung durch die kennzeichnenden Merkmale des Anspruchs 1 gelöst.

Bei der ersten Sensoreinrichtung der erfindungsgemäßen Bedienvorrichtung handelt es sich um eine kapazitive Sensoreinrichtung für die Detektierung des Bedienelementes im Nahfeld zur Sensorfläche.

Bei der erfindungsgemäßen Bedienvorrichtung umfasst die kapazitiv arbeitende erste Sensoreinrichtung Leiterbahnen in der Art einer Sensormatrix auf einer Leiterplatte. Mit Hilfe dieser matrixförmig angeordneten Leiterbahnen arbeitet die erste Sensoreinrichtung hochauflösend. In einfacher Art und Weise können die Leiterbahnen an der der Sensorfläche zugewandten Seite der Leiterplatte angeordnet sein. Zweckmäßigerweise kann die Leiterplatte an der Sensorfläche, und zwar insbesondere an deren Innenseite, angeordnet sein. Die optisch arbeitende zweite Sensoreinrichtung weist einen optischen Sender, insbesondere mehrere optische Sender, und wenigstens einen optischen Empfänger auf. In kompakter platzsparender Bauweise kann der optische Sender und/oder der optische Empfänger an der der Sensorfläche abgewandten Seite der Leiterplatte angeordnet sein. In einfacher Ausgestaltung ist in der Leiterplatte ein Durchbruch für den optischen Sender und/oder den optischen Empfänger befindlich, derart dass die optische Strahlung durch den Durchbruch zwischen dem optischen Sender und/oder dem optischen Empfänger sowie der Sensorfläche übertragen wird.

Eine solche Bedienvorrichtung arbeitet mit einem hochauflösenden kapazitiven System zur exakten Detektion einer Berührung der Sensorfläche durch den Finger und der Fingerposition, also deren x-, y- Koordinaten, an der Sensorfläche in Verbindung mit einem Sensorbaustein sowie mit einem einfachen optischen System zur Detektion von Bewegungen des Fingers, der Finger und/oder der Hand des Benutzers im Fernfeld zur Sensorfläche durch Reflexionsmessungen. Es handelt sich also um eine Sensorkombination, bei welcher die IR-Sensorik ebenfalls der Fernfeld-Detektion und die kapazitive Sensorik der Nahfeld-Detektion dienen. Hier ist die Optik jedoch einfach ausgeführt, indem diese wenige Bauteile besitzt. Es können dadurch beispielsweise einfache Wischbewegungen im Raum erkannt werden. Vorteilhafterweise ist dadurch der Bedienwunsch des Benutzers schon vorab erkennbar, so dass vorbereitende Funktionen durch das Bedienfeld auslösbar sind.

Die kapazitive Sensorik besteht aus einer Leiterbahnenstruktur, welche an ein Auswerte-IC angeschlossen ist, und detektiert die Bewegungen auf dem Touchpad (x-, y-Koordinaten).

Weitere Ausgestaltungen der Erfindung sind Gegenstand der Unteransprüche.

In einer weiteren Ausgestaltung kann es sich in kostengünstiger Weise beim optischen Sender um eine Leuchtdiode sowie beim optischen Empfänger der reflexionsoptischen Sensoreinrichtung um eine Fotodiode handeln.

Die Bedienvorrichtung kann ein Gehäuse besitzen, womit die Bedienvorrichtung als vormontierbares, komplettes Bauteil herstellbar ist. Zweckmäßigerweise bildet die Sensorfläche eine Oberfläche bzw. einen Teil einer Oberfläche an dem Gehäuse. Damit dient dieser Teil der Oberfläche am Gehäuse als Bedienoberfläche für den Finger oder die Finger des Benutzers. Desweiteren bietet es sich an, dass die erste Sensoreinrichtung und/oder die zweite Sensoreinrichtung im Inneren des Gehäuses befindlich ist. In kompakter Ausgestaltung kann eine Steuereinrichtung zur Auswertung des ersten Signals und/oder des zweiten Signals und/oder zum Betrieb der Sensoreinrichtung im Inneren des Gehäuses befindlich sein.

Besonders bevorzugt ist es, dass es sich bei der optischen Strahlung um Infrarot(IR)-Strahlung handelt, da diese für das menschliche Auge nicht sichtbar ist. Die Sensorfläche kann dann aus einem Material hergestellt werden, das für Infrarot-Strahlung im wesentlichen durchlässig ist. Insbesondere ist die Sensorfläche für Infrarot-Strahlung durchlässig ausgebildet, wenn sich der optische Sender und/oder der optische Empfänger im Gehäuse der Bedienvorrichtung befindet.

Für eine besonders bevorzugte Ausführung der Erfindung ist nachfolgendes festzustellen. Geschaffen ist eine berührungssensitive Fläche auf Basis Infrarottechnologie mit einer zweiten sensorischen Auswertestufe. Hierzu wird eine Infrarot-Sensorik durch eine unterstützende Sensorik im Nahfeld erweitert und mit dieser kombiniert. Durch die Kombination der ersten IR-Sensorik mit einer zweiten unabhängigen kapazitiven Sensoreinrichtung kann eine exakte Unterscheidung der Felder in Nah- und Fernfeld berechnet werden. Dies geschieht in Kombination der Systeme und kann über unterschiedliche Verknüpfungen kombiniert werden. Dadurch ist die genaue Detektion eines infrarot reflektierenden Gegenstandes im Fernfeld und die ortsgenaue Auflösung im Nahfeld zur Sensorfläche ermöglicht. Das zweite Signal detektiert die kraftlose Berührung des Gegenstandes auf der Sensorfläche. Dieses Signal wird zur Umschaltung der Software auf Nahbereichsauflösung, z.B. für die Eingabe von Schriftzeichen und berührende Gestiken etc., bzw. zur Rückschaltung auf Fernfeldauflösung genutzt. Vorteilhafterweise wird dadurch z.B. die vorausschauende Softwaresteuerung, die Erkennung von Gestiken im 3D-Raum, das Verhalten von Passagieren im Kraftfahrzeug etc. ermöglicht.

Die mit der Erfindung erzielten Vorteile bestehen insbesondere darin, dass neue Bedienfunktionen im Fahrzeug für den Benutzer ermöglicht sind. Beispielsweise kann es sich hierbei um die Annäherungsdarstellung von Bedienelementen an eine berührungssensitve Fläche handeln. Es sind sehr kurze Reaktionszeiten des Gesamtsystems erzielbar. Desweiteren ist die Unterscheidung von willentlicher und zufälliger Eingabe erleichtert. Das System bietet eine hohe Auflösung zur Auswertung von Bewegungen auf einer Sensorfläche. Schließlich ist auch die Berechnung von Abheben und Berührungen auf minimalen Abständen über der Sensorfläche möglich.

Ausführungsbeispiele einer Bedienvorrichtung mit verschiedenen Weiterbildungen und Ausgestaltungen sind in den Zeichnungen dargestellt und werden im folgenden näher beschrieben. Es zeigen
- Fig. 1: eine Bedienvorrichtung in perspektivischer Ansicht,
- Fig. 2: einen schematischen Schnitt entlang der Linie 2-2 in Fig. 1 in der Art einer Prinzipskizze zur Funktionsweise der Bedienvorrichtung,
- Fig. 3: einen Schnitt wie in Fig. 2 für ein nicht der Erfindung entsprechendes Ausführungsbeispiel und
- Fig. 4: einen Schnitt wie in Fig. 2 für ein Ausführungsbeispiel der Erfindung.

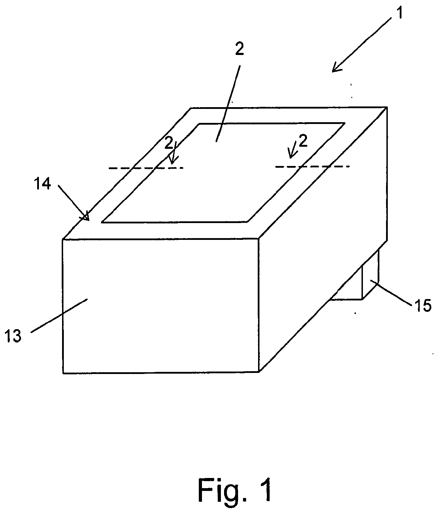

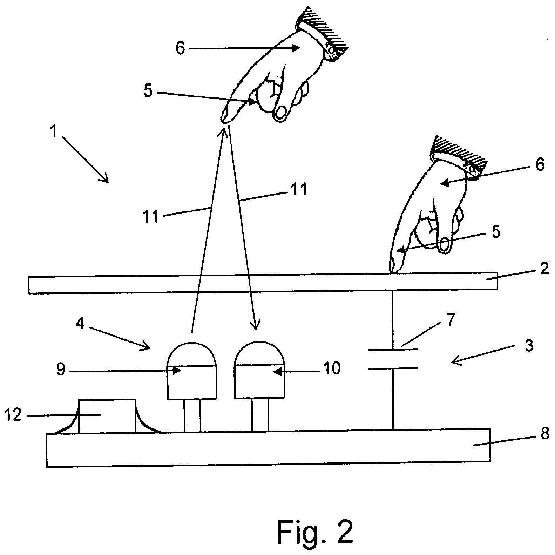

In Fig. 1 ist eine Bedienvorrichtung 1 zu sehen, die insbesondere für ein Kraftfahrzeug Verwendung findet. Die Bedienvorrichtung 1 weist ein aus Kunststoff bestehendes Gehäuse 13 auf, an dessen einen Oberfläche 14 eine Sensorfläche 2 befindlich ist. Der Benutzer kann beispielsweise mittels entsprechender Bewegung eines Fingers 5 (siehe Fig. 2) an der Sensorfläche 2 die Bedienvorrichtung bestimmungsgemäß bedienen. Beispielsweise kann die Bedienvorrichtung 1 in der Mittelkonsole des Kraftfahrzeugs angeordnet sein und für die Bedienung eines Navigationssystems, eines Bildschirms o. dgl. im Kraftfahrzeug vorgesehen sein. Die Bedienvorrichtung 1 ist mittels eines Steckeranschlusses 15 beispielsweise an ein Bussystem im Kraftfahrzeug anschließbar.

In der Fig. 2 ist die Bedienvorrichtung 1 mit der Sensorfläche 2 und mit einer ersten Sensoreinrichtung 3 als Prinzipskizze näher gezeigt. Bei Berührung der Sensorfläche 2 mittels eines Bedienelements, hier beispielsweise des Fingers 5 der Hand 6 eines Benutzers und/oder in unmittelbarer Nähe des Bedienelements 5 an der Sensorfläche 2 ist ein erstes Signal erzeugbar. Eine zweite Sensoreinrichtung 4 detektiert die Annäherung des Bedienelements 5 an die Sensorfläche 2 und/oder Bewegungen des Bedienelements 5 über der Sensorfläche 2 und/oder Bewegungen des Bedienelements 5 auf der Sensorfläche 2, insbesondere unter Erzeugung eines zweiten Signals.

Bei der ersten Sensoreinrichtung 3 handelt es um eine kapazitive Sensoreinrichtung für die Detektierung im Nahfeld zur Sensorfläche 2. Hierzu steht wenigstens ein Kondensator 7, der beispielsweise von einer elektrisch leitfähigen Fläche gebildet ist, mit der Sensorfläche 2 und einer Leiterplatte 8 in elektrischer Verbindung. Selbstverständlich kann die erste Sensoreinrichtung 3 auch mittels Oberflächenwellen arbeiten oder aus einer resistiven, induktiven o. dgl. Sensoreinrichtung bestehen, was jedoch nicht weiter gezeigt ist. Bei der zweiten Sensoreinrichtung 4 handelt es sich um eine reflexionsoptische Sensoreinrichtung für die Detektierung, insbesondere im Fernfeld zur Sensorfläche 2. Hierzu weist die Sensoreinrichtung 4 wenigstens einen optischen Sender 9, hier eine Leuchtdiode, und wenigstens einen optischen Empfänger 10, hier eine Fotodiode, für optische Strahlung 11 auf.

Die Leuchtdiode 9 sowie die Fotodiode 10 sind auf der Leiterplatte 8 angeordnet. Die Leiterplatte 8 ist im Gehäuse 13 angeordnet, so dass die erste Sensoreinrichtung 3 sowie die zweite Sensoreinrichtung 4 im Inneren des Gehäuses 13 befindlich sind. Ebenfalls auf der Leiterplatte 8 befindet sich eine als Steuereinrichtung 12 dienende Elektronik zum Betrieb der beiden Sensoreinrichtungen 3, 4 sowie zur Erzeugung des ersten und zweiten Signals. Die Steuereinrichtung 12 ist somit auch im Inneren des Gehäuses 13 befindlich. Bei der optischen Strahlung 11 handelt es sich bevorzugterweise um für das menschliche Auge unsichtbare Infrarot(IR)-Strahlung. Die Sensorfläche 2 ist für Infrarot-Strahlung im wesentlichen durchlässig, insbesondere indem ein IR-durchlässiger Kunststoff als Material für die Sensorfläche 2 gewählt ist.

Alternativ kann es sich bei der ersten Sensoreinrichtung auch um eine wenigstens eine Leuchtdiode und wenigstens eine Fotodiode für optische Strahlung aufweisende reflexionsoptische Sensoreinrichtung für die Detektierung im Nahfeld zur Sensorfläche 2 handeln. Bei der zweiten Sensoreinrichtung kann es sich wiederum um eine kapazitive, mittels Oberflächenwellen arbeitende, resistive, induktive o. dgl. Sensoreinrichtung für die Detektierung im Fernfeld zur Sensorfläche 2 handeln. Schließlich ist es auch möglich, dass es sich bei der ersten und der zweiten Sensoreinrichtung jeweils um eine wenigstens eine Leuchtdiode und wenigstens eine Fotodiode für optische Strahlung aufweisende reflexionsoptische Sensoreinrichtung für die Detektierung im Nahfeld sowie im Fernfeld zur Sensorfläche 2 handelt. Diese Alternativen sind insoweit jedoch in der Fig. 2 nicht weiter dargestellt.

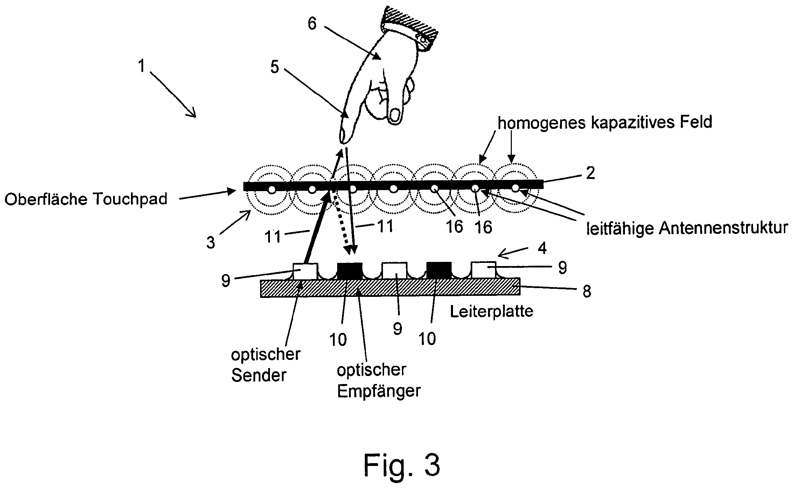

In Fig. 3 ist ein nicht der Erfindung entsprechendes Ausführungsbeispiel eine Bedienvorrichtung 1 mit einem hochauflösenden optischen System und mit einem einfachen kapazitiven System gezeigt. Die kapazitiv arbeitende erste Sensoreinrichtung 3 umfasst eine leitfähige Antennenstruktur 16, die an der dem Inneren des Gehäuses 13 zugewandten Innenseite der Sensorfläche 2 angeordnet ist. Durch Anlegen von elektrischer Spannung an die Antennenstruktur 16 ist ein im wesentlichen homogenes kapazitives Feld an der Oberfläche der Sensorfläche 2 erzeugbar. Die optisch arbeitende zweite Sensoreinrichtung 4 weist einen optischen Sender 9 und wenigstens einen optischen Empfänger 10 auf. Vorliegend besitzt die zweite Sensoreinrichtung 4 mehrere optische Sender 9 und mehrere optische Empfänger 10. Dadurch arbeitet die zweite Sensoreinrichtung 4 hochauflösend. Die optischen Sender 9 sowie die optischen Empfänger 10 sind auf einer im Gehäuse 13 befindlichen Leiterplatte 8, und zwar an der der Sensorfläche 2 zugewandten Seite der Leiterplatte 8, angeordnet.

Die hochauflösende optische Sensoreinrichtung 4 gestattet eine exakte Detektion der Position des Fingers 5 sowohl räumlich im Fernfeld (x-, y- und z-Koordinaten) zur Sensorfläche 2 als auch zweidimensional im Nahfeld (x- und y-Koordinaten) an der Sensorfläche 2 mittels Reflexion der optischen Strahlung 11. Die einfach gestaltete kapazitive Sensoreinrichtung 3 gestattet mittels des homogenen kapazitiven Feldes auf der Bedienoberfläche eine exakte Detektion der Berührung der Sensorfläche 2 durch den Finger 5.

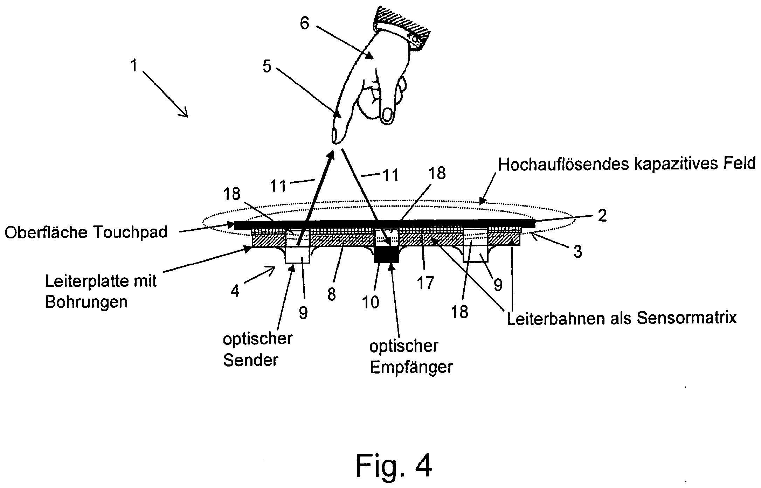

In Fig. 4 ist als ein Ausführungsbeispiel der Erfindung eine Bedienvorrichtung 1 mit einem hochauflösenden kapazitiven System und mit einem einfachen optischen System gezeigt. Die kapazitiv arbeitende erste Sensoreinrichtung 3 umfasst Leiterbahnen 17 zum Anlegen einer elektrischen Spannung. Die Leiterbahnen 17 sind in der Art einer Sensormatrix in x- und y-Richtung verlaufend auf der Leiterplatte 8 angeordnet, so dass die erste Sensoreinrichtung 3 hochauflösend arbeitet. Die Leiterbahnen 17 sind an der der Sensorfläche 2 zugewandten Seite der Leiterplatte 8 angeordnet. Die Leiterplatte 8 ist wiederum an der dem Inneren des Gehäuses 13 zugewandten Innenseite der Sensorfläche 2 angeordnet. Die optisch arbeitende zweite Sensoreinrichtung 4 weist einen optischen Sender 9 und einen optischen Empfänger 10 auf. Vorliegend besitzt die zweite Sensoreinrichtung 4 mehrere optische Sender 9 und einen optischen Empfänger 10. Die optischen Sender 9 und der optische Empfänger 10 sind an der der Sensorfläche 2 abgewandten Seite der Leiterplatte 8 angeordnet. In der Leiterplatte 8 befinden sich Durchbrüche 18 für die optischen Sender 9 und den optischen Empfänger 10. Der optische Sender 9 sowie der optische Empfänger 10 sind jeweils so am zugehörigen Durchbruch 18 angeordnet, dass die optische Strahlung 11 im wesentlichen ungestört durch den Durchbruch 18 zwischen dem optischen Sender 9 beziehungsweise dem optischen Empfänger 10 sowie der Sensorfläche 2 übertragen wird.

Die aufgrund der Leiterbahnenstruktur als Sensormatrix hochauflösende kapazitive Sensoreinrichtung 3 gestattet eine exakte Detektion der Berührung der Sensorfläche 2 durch den Finger 5 sowie in Verbindung mit der Elektronik 12 die exakte Detektion der Position des Fingers 5 zweidimensional im Nahfeld (x- und y-Koordinaten) an der Sensorfläche 2. Die einfach gestaltete optische Sensoreinrichtung 4 gestattet die Detektion von Bewegungen des Fingers 5 im Fernfeld zur Sensorfläche 2 durch Reflexionsmessungen der optischen Strahlung 11.

Die Erfindung ist nicht auf die beschriebenen und dargestellten Ausführungsbeispiele beschränkt. Sie umfasst vielmehr auch alle fachmännischen Weiterbildungen im Rahmen der durch die Patentansprüche definierten Erfindung. So kann die Erfindung nicht nur für alle Bedienelemente im Kraftfahrzeug sondern auch für sonstige Geräte, beispielsweise Hausgeräte, Werkzeugmaschinen, Computersteuerungen o. dgl. Verwendung finden.

### Bezugszeichen-Liste:

- 1:: Bedienvorrichtung
- 2:: Sensorfläche
- 3:: (erste) Sensoreinrichtung
- 4:: (zweite) Sensoreinrichtung
- 5:: Finger / Bedienelement
- 6:: Hand (von Benutzer)
- 7:: Kondensator
- 8:: Leiterplatte
- 9:: optischer Sender / Leuchtdiode
- 10:: optischer Empfänger / Fotodiode
- 11:: optische Strahlung
- 12:: Steuereinrichtung / Elektronik
- 13:: Gehäuse (von Bedienvorrichtung)
- 14:: Oberfläche (von Gehäuse)
- 15:: Steckeranschluss (am Gehäuse)
- 16:: Antennenstruktur
- 17:: Leiterbahn
- 18:: Durchbruch (an Leiterplatte)

## Patentansprüche

1. Bedienvorrichtung für ein Kraftfahrzeug, mit einer Sensorfläche (2) und mit einer ersten Sensoreinrichtung (3), derart dass bei Berührung der Sensorfläche (2) und/oder in unmittelbarer Nähe der Sensorfläche (2) ein erstes Signal erzeugbar ist, wobei es sich bei der ersten Sensoreinrichtung (3) um eine kapazitive Sensoreinrichtung für die Detektierung im Nahfeld zur Sensorfläche (2) handelt, und mit einer zweiten Sensoreinrichtung (4) zur Detektion von Bewegungen über der Sensorfläche (2) und/oder Bewegungen auf der Sensorfläche (2) und/oder die Annäherung an die Sensorfläche (2) unter Erzeugung eines zweiten Signals, wobei es sich bei der zweiten Sensoreinrichtung (4) um eine wenigstens einen optischen Sender (9) und wenigstens einen optischen Empfänger (10) für optische Strahlung (11) aufweisende reflexionsoptische Sensoreinrichtung für die Detektierung entfernt zur Sensorfläche (2) handelt, **dadurch gekennzeichnet, dass** die kapazitiv arbeitende erste Sensoreinrichtung (3) Leiterbahnen (17) in der Art einer Sensormatrix auf einer Leiterplatte (8) umfasst, dass die Leiterbahnen (17) an der der Sensorfläche (2) zugewandten Seite der Leiterplatte (8) angeordnet sind, dass die Leiterplatte (8) an der Sensorfläche (2) angeordnet ist, dass der optische Sender (9) und/oder der optische Empfänger (10) der zweiten Sensoreinrichtung (4) an der der Sensorfläche (2) abgewandten Seite der Leiterplatte (8) angeordnet ist, und dass in der Leiterplatte (8) ein Durchbruch (18) für den optischen Sender (9) und/oder den optischen Empfänger (10) befindlich ist, derart dass die optische Strahlung (11) durch den Durchbruch (18) zwischen dem optischen Sender (9) und/oder dem optischen Empfänger (10) sowie der Sensorfläche (2) übertragen wird.

2. Bedienvorrichtung nach Anspruch 1, **dadurch gekennzeichnet, dass** es sich bei dem optischen Sender (9) um eine Leuchtdiode und bei dem optischen Empfänger (10) um eine Fotodiode handelt.

3. Bedienvorrichtung nach Anspruch 1 oder 2, **dadurch gekennzeichnet, dass** die Sensorfläche (2) eine Oberfläche (14) an einem Gehäuse (13) bildet.

4. Bedienvorrichtung nach Anspruch 3, **dadurch gekennzeichnet, dass** die erste Sensoreinrichtung (3) und/oder die zweite Sensoreinrichtung (4) im Inneren des Gehäuses (13) befindlich ist.

5. Bedienvorrichtung nach Anspruch 3 oder 4, **dadurch gekennzeichnet, dass** eine Steuereinrichtung (12) zur Auswertung des ersten Signals und/oder des zweiten Signals und/oder zum Betrieb der Sensoreinrichtung (3, 4) im Inneren des Gehäuses (13) befindlich ist.

6. Bedienvorrichtung nach einem der Ansprüche 1 bis 5, **dadurch gekennzeichnet, dass** es sich bei der optischen Strahlung (11) um Infrarot(IR)-Strahlung handelt.

7. Bedienvorrichtung nach Anspruch 6, **dadurch gekennzeichnet, dass** die Sensorfläche (2) für Infrarot-Strahlung im wesentlichen durchlässig ist.

8. Bedienvorrichtung nach einem der Ansprüche 1 bis 7, **dadurch gekennzeichnet, dass** die erste Sensoreinrichtung (3) hochauflösend arbeitet.

9. Bedienvorrichtung nach einem der Ansprüche 1 bis 8, **dadurch gekennzeichnet, dass** mehrere optische Sender (9) für die zweite Sensoreinrichtung (4) vorgesehen sind.

## Claims

1. An operating device for a motor vehicle, having a sensor surface (2) and having a first sensor device (3), such that a first signal can be generated when the sensor surface (2) is contacted and/or in the immediate vicinity of the sensor surface (2), wherein the first sensor device (3) is a capacitive sensor device for detection in the near field to the sensor surface (2), and having a second sensor device (4) for the detection of movements over the sensor surface (2) and/or movements on the sensor surface (2) and/or the approach to the sensor surface (2) producing a second signal, wherein the second sensor device (4) is a reflectionoptical sensor device having at least one optical transmitter (9) and at least one optical receiver (10) for optical radiation (11) for detection remote from the sensor surface (2), **characterised in that** the capacitively operating first sensor device (3) comprises printed conductors (17) in the manner of a sensor matrix on a printed circuit board (8), **in that** the printed conductors (17) are arranged on the side of the printed circuit board (8) facing the sensor surface (2), **in that** the printed circuit board (8) is arranged on the sensor surface (2) such that the optical transmitter (9) and/or the optical receiver (10) of the second sensor device (4) is arranged on the side of the printed circuit board (8) facing away from the sensor surface (2), and **in that** the circuit board (8) has an opening (18) for the optical transmitter (9) and/or the optical receiver (10), such that the optical radiation (11) is transmitted through the opening (18) between the optical transmitter (9) and/or the optical receiver (10) and the sensor surface (2).

2. The operating device according to claim 1, **characterised in that** the optical transmitter (9) is a light-emitting diode and the optical receiver (10) is a photodiode.

3. The operating device according to claim 1 or 2, **characterised in that** the sensor surface (2) forms a surface (14) on a housing (13).

4. The operating device according to claim 3, **characterised in that** the first sensor device (3) and/or the second sensor device (4) is located inside the housing (13).

5. The operating device according to claim 3 or 4, **characterised in that** a control device (12) for evaluating the first signal and/or the second signal and/or for operating the sensor device (3, 4) is located inside the housing (13).

6. The operating device according to any one of claims 1 to 5, **characterised in that** the optical radiation (11) is infrared (IR) radiation.

7. The operating device according to claim 6, **characterised in that** the sensor surface (2) is substantially transparent to infrared radiation.

8. The operating device according to any one of claims 1 to 7, **characterised in that** the sensor device (3) works with high resolution.

9. The operating device according to any one of claims 1 to 8, **characterised in that** a plurality of optical transmitters (9) are provided for the second sensor device (4).

## Revendications

1. Dispositif de commande pour un véhicule à moteur, comprenant une surface de capteur (2) et un premier dispositif capteur (3), de telle sorte que, lors d'un contact avec la surface de capteur (2) et/ou à proximité immédiate de la surface de capteur (2), un premier signal puisse être généré, le premier dispositif capteur (3) étant un dispositif capteur capacitif pour la détection dans le champ proche de la surface du capteur (2) et un deuxième dispositif capteur (4) destiné à la détection des mouvements sur la surface de capteur (2) et/ou des mouvements à la surface du capteur (2) et/ou l'approche de la surface de capteur (2) en produisant un deuxième signal, le deuxième dispositif capteur (4) étant un dispositif capteur optique à réflexion présentant au moins un émetteur (9) optique et au moins un récepteur (10) optique pour le rayonnement (11) optique pour la détection distante de la surface de détection (2), **caractérisé en ce que** le premier dispositif capteur (3) à fonctionnement capacitif comporte des pistes conductrices (17) à la manière d'une matrice de capteurs sur une carte de circuit imprimé (8), que les pistes conductrices (17) sont disposés sur le côté de la carte de circuit imprimé (8) tourné vers la surface du capteur (2), que la carte de circuit imprimé (8) est agencée sur la surface de capteur (2), que l'émetteur (9) optique et/ou le récepteur (10) optique du deuxième dispositif capteur (4) sont agencés sur le côté de la carte de circuit imprimé (8) opposé à la surface de capteur (2) et que dans la carte de circuit imprimé (8) une ouverture (18) est prévue pour l'émetteur (9) optique et/ou le récepteur (10) optique de telle sorte que le rayonnement (11) optique est transmis à travers l'ouverture (18) entre l'émetteur (9) optique et/ou le récepteur (10) optique ainsi que la surface de capteur (2).

2. Dispositif de commande selon la revendication 1, **caractérisé en ce que** l'émetteur (9) optique est une diode électroluminescente et le récepteur (10) optique est une photodiode.

3. Dispositif de commande selon la revendication 1 ou 2, **caractérisé en ce que** la surface de capteur (2) forme une surface (14) sur un boîtier (13).

4. Dispositif de commande selon la revendication 3, **caractérisé en ce que** le premier dispositif capteur (3) et/ou le deuxième dispositif capteur (4) se trouvent à l'intérieur du boîtier (13).

5. Dispositif de commande selon la revendication 3 ou 4, **caractérisé en ce qu'**un dispositif de commande (12) permettant d'évaluer le premier signal et/ou le deuxième signal et/ou de faire fonctionner le dispositif capteur (3, 4) se trouve à l'intérieur du boîtier (13).

6. Dispositif de commande selon l'une quelconque des revendications 1 à 5, **caractérisé en ce que** le rayonnement (11) optique est un rayonnement infrarouge (IR).

7. Dispositif de commande selon la revendication 6, **caractérisé en ce que** la surface de capteur (2) est sensiblement perméable au rayonnement infrarouge.

8. Dispositif de commande selon l'une quelconque des revendications 1 à 7, **caractérisé en ce que** le premier dispositif capteur (3) fonctionne en haute résolution.

9. Dispositif de commande selon l'une quelconque des revendications 1 à 8, **caractérisé en ce que** le deuxième dispositif capteur (4) est pourvu d'une pluralité d'émetteurs (9) optiques.
